# EUROPEAN PATENT SPECIFICATION

(11) **EP 3 964 359 B1**
(45) Date of publication and mention of the grant of the patent: **23.04.2025**
(21) Application number: 21194651.2
(22) Date of filing: 02.09.2021
(51) Int. Cl.: B32B 7/12, B32B 27/40, C08G 18/00, C08L 75/04, B32B 27/08

(54) **MULTILAYER MATERIAL COMPRISING A FIRST POLYURETHANE LAYER, CORRESPONDING MANUFACTURING METHOD AND ARTICLE COMPRISING THE MULTILAYER MATERIAL**
MEHRSCHICHTIGES MATERIAL MIT EINER ERSTEN POLYURETHANSCHICHT, ZUGEHÖRIGES HERSTELLUNGSVERFAHREN UND ARTIKEL MIT DEM MEHRSCHICHTIGEN MATERIAL
MATÉRIAU MULTICOUCHE COMPRENANT UNE PREMIÈRE COUCHE DE POLYURÉTHANE, PROCÉDÉ DE FABRICATION CORRESPONDANT ET ARTICLE COMPRENANT LE MATÉRIAU MULTICOUCHE

(30) Priority: 02.09.2020 IT 202000020887
(43) Date of publication of application: 09.03.2022
(73) Proprietor: Maspes S.r.l., 12020 Tarantasca (CN) (IT)
(72) Inventor: ABELLO, Mauro, 12020 TARANTASCA (CN) (IT)
(74) Representative: Studio Torta S.p.A.

(56) References cited:
- DATABASE WPI Week 202007, Derwent World Patents Index; AN 2020-79905H, XP002802734

## Description

### CROSS-REFERENCE TO RELATED APPLICATIONS

This patent application claims priority from Italian patent application no. 102020000020887 filed on September 2, 2020.

### TECHNICAL SECTOR

The present invention relates to a multilayer material comprising a first polyurethane layer and, in particular, to a multilayer material comprising a first layer of compact polyurethane and a second adhesive layer, to a manufacturing method thereof, and to an article comprising the multilayer material.

JP2020125432 discloses an optically clear adhesive sheet excellent in production stability and reliability under a high-temperature/high-humidity environment, and a laminated sheet and a bonded structure using the optically clear adhesive sheet.

### STATE OF THE ART

It is known to make polyurethane layers and, in particular, polyurethane sheets adhere to supports of various chemical nature by directly vulcanising the polyurethane on the support. This process is carried out at the vulcanisation temperature of the polyurethane and is therefore a very complex, inflexible and costly hot process.

The complexity of the process also makes it difficult to use it for a range of articles that are either too large or too small to undergo a vulcanisation process.

It would therefore be desirable to have a process for making the polyurethane adhere to a plurality of supports of different chemical nature and capable of being used for articles that are very different in the dimensions and shape.

### SUMMARY OF THE INVENTION

Aim of the invention is a multilayer material capable of solving the problems described above and which, in particular, is easy and economical to produce and which is capable of making the polyurethane adhere to supports of a very different chemical nature and, moreover, that the multilayer material can be made to adhere to a support so as to obtain an article capable of resisting for a long time without the risk of detachment of the polyurethane portion.

This aim is achieved by the present invention, as it relates to a multilayer material according to claim 1.

A further aim is also the production of an article comprising a support and the multilayer material.

This aim is achieved by an article according to claim 9.

A further aim of the present invention is a method for manufacturing a multilayer material which does not include a vulcanisation step, but which is easy and economical to produce.

This aim is achieved by a method for manufacturing a multilayer material according to claim 10.

### DESCRIPTION OF THE INVENTION

Within the scope of the present invention, a polymeric material is understood to mean a material based on polymers, whether they are polymers derived from a single monomer or copolymers or mixtures of more polymers, also having different characteristics.

Within the scope of the present invention, a multilayer material is understood to be a material comprising at least two layers having different chemical nature.

Within the scope of the present invention, a polymeric multilayer material is understood to be a material comprising at least two layers having different chemical nature which are both predominantly polymeric or more than 50% polymeric.

In the context of the present invention, a layer is understood to mean an element consisting of one or more materials which allow to have the same chemical and physical characteristics throughout the element. A layer can also have different thicknesses and forms as long as the chemical composition inside remains substantially the same. A layer can consist of a film or a suitably formed tape.

The multilayer material of the present invention comprises a first polyurethane layer, a compact polyurethane, e.g. produced starting from diphenylmethane diisocyanate (MDI), toluene diisocyanate (TDI), naphthalene diisocyanate (NDI).

The thickness of the first polyurethane layer is greater than 1 mm, preferably greater than 2 mm to withstand the mechanical stresses to which it is subjected in applications where the multilayer material is used. The multilayer material preferably has a thickness between 1 mm and 1 cm, more preferably between 1 mm and 5 mm, even more preferably between 2 mm and 5 mm.

The multilayer material therefore has a thickness in any case greater than 1 mm and more preferably greater than 2 mm. In the context of the present invention, "compact polyurethane" is understood to mean a thermosetting polyurethane suitable for casting moulding and which is then cast. The "compact polyurethane" is entirely cross-linked and is not expanded so that no significant air inclusions are present.

The compact polyurethane has a density in g/cm3 between 0.90 and 1.50, more preferably between 0.90 and 1.45, and more preferably between 1 and 1.4.

The compact polyurethane has hardnesses between 40 Shore A and 75 Shore D.

The compact polyurethane has even more preferably hardnesses between 60 shore A and 95 shore A.

Shore hardness is a material parameter for elastomers and plastics including polyurethane and is established and measured according to DIN 53505 and DIN EN ISO 868.

The compact polyurethane can be additivated with additional chemicals in order to impart special characteristics useful for a specific application.

Preferably the percentage by weight of the compact polyurethane inside the first layer of the multilayer material is in any case greater than 90%, more preferably more than 95%, even more preferably more than 99%, where the remaining part of the layer is formed by additives. The surface of the first layer is also treated with a primer.

In this way the primer allows to increase the adhesion between the first layer and a second layer between which it is interposed.

In the context of the present invention, a primer is understood to mean an "adhesion promoter" which promotes the adhesion of a surface or protects a surface from external factors (corrosion, UV, other), or both.

Primers preferably comprise a solvent and an active ingredient. Preferably the solvent is an organic solvent or water.

Preferably the "Active ingredients" comprise a substance selected from the group consisting of acrylates, isocyanates, silanates, epoxides or polyurethanes.

More preferably the active ingredient is based on an acrylate, even more preferably it is or consists of an acrylate.

The second layer is made of an adhesive material on both sides of the layer or entirely adhesive.

Double-sided adhesive tapes are preferably used to form the second layer.

Preferably the second layer comprises a substance selected from the group consisting of a substance of acrylic or silicone nature or a natural rubber.

More preferably, the second layer is made entirely of a substance of acrylic or silicone nature or a natural rubber.

More preferably, the second layer comprises an acrylate.

Even more preferably, the second layer is made entirely of an acrylate.

Alternatively, the second layer is made of an additivated acrylate.

The multilayer material is opaque, but can be coloured in different colours depending on the applications.

The production process of the multilayer material consists of a series of steps comprising:
- form a first layer of compact polyurethane elastomer;
- treat the surface of the compact polyurethane elastomer by first washing the surface;
- treat the surface of the compact polyurethane elastomer by buffing the surface;
- treat the surface of the compact polyurethane elastomer by a second washing of the surface;
- treat a surface of the first layer with a primer;
- adhesive the second layer to the first layer by means of the adhesive capacity of the second layer itself.

Subsequently it is possible to make the material adhere to a support so as to form an article or product having various shapes or forms.

The advantages of the multilayer material according to the present invention are clear, in particular, it is possible to solve the above-described problems and it is possible to manufacture articles, e.g., hopper guards, vibrating orientators, gripping handles, channel, support plates, cutting tables, belt or conveyor belt pads, general impact guards easily and without any limitation in shapes and forms.

According to the invention the multilayer material is adhesivized to a support such as a metal layer in order to protect the surface from wear or modify its surface properties. Preferably the metal layer has a thickness greater than 2 mm, more preferably greater than 5 mm.

In particular, it is advantageously used as a work surface covering in vibrating orientators where it is bonded to the work surface for various functions, such as preventing damage to the pieces to be oriented or improving adhesion. In such applications, the multilayer material preferably has a hardness of about 60 shore A, in order to provide more friction and cushion impacts when the orientator is loaded with the pieces to be orientated.

A further application for the multilayer material of the present invention is in coated hoppers, for example to facilitate the flow of cement, or the flow of grain or the like. Such hoppers are coated with the multilayer material of the present invention to prevent wear of the iron or metal forming the surface of the hopper. The multilayer material is easy to apply, even on complex-shaped surfaces such as the hoppers, as it only needs to be mounted with the adhesive. For the hoppers the preferred hardness for the multilayer material is about 95 shore A to increase the resistance of the surface itself.

The multilayer material is also advantageously used also in the protection of forklift forks to avoid damage to the materials handled such as aluminium or the like. Again, also in this case the multilayer material significantly simplifies the process because it can be applied directly to the fork and there is no need to send the forks through the polyurethane vulcanisation process to obtain a coating. Furthermore, the forks are usually certified and therefore for example an iron plate coated with polyurethane cannot be screwed thereon as they would lose the certifications. For these applications, the adhesive polyurethane is made with different dimensions and hardnesses from 60 to 95 shore A depending on the material that will move the fork.

Finally, the multilayer material is advantageously also used for the coating of technical articles, generally metallic ones, according to drawings of various shapes and dimensions. In these cases the thicknesses and the forms can be of any type.

## Claims

1. Article comprising a multilayer material comprising:
- a first layer of compact thermosetting polyurethane, entirely cross-linked and having a density in gr/cm3 between 0.90 and 1.5 and hardnesses, measured according to the description, between 40 shore A and 75 shore D and a thickness greater than 1 mm;
- a second layer made of an adhesive material on both faces;
- a primer interposed between said first layer and said second layer, said primer comprising at least one substance selected from the group consisting of acrylates, isocyanates, silanates, epoxides or polyurethanes, and a metallic support adhesivized to said second layer.

2. Article according to claim 1, **characterized in that** said compact polyurethane is produced starting from diphenylmethane diisocyanate (MDI), toluene diisocyanate (TDI), naphthalene diisocyanate (NDI).

3. Article according to any one of the preceding claims, **characterized in that** said compact polyurethane has a density between 1 and 1.4.

4. Article according to any one of the preceding claims, **characterized in that** said compact polyurethane preferably has a hardness of between 60 shore A and 95 shore A.

5. Article according to any one of the preceding claims, **characterized in that** said second layer is made entirely of a substance selected from the group consisting of acrylates, silicones, natural rubber.

6. Article according to any one of the preceding claims, **characterized in that** said second layer is a double-sided adhesive tape.

7. Article according to any one of the preceding claims, **characterized in that** said primer comprises an acrylate.

8. Article according to any one of the preceding claims, **characterized in that** said primer consists of an acrylate.

9. Article according to any one of the preceding claims, **characterized in that** said metal support has a thickness of more than 2 mm.

10. Process for making an article comprising a multilayer material according to any one of claims 1 to 8 comprising the steps of:
- form a first layer of compact thermosetting polyurethane polyurethane;
- treat the surface of the compact thermosetting polyurethane by first washing the surface;
- treat the surface of the compact thermosetting polyurethane by buffing the surface;
- treat the surface of the compact thermosetting polyurethane by a second washing of the surface;
- treat a surface of the first layer with a primer;
- adhesivize the second layer to the first layer by means of the adhesive capacity of the second layer itself.

## Patentansprüche

1. Gegenstand, umfassend ein mehrschichtiges Material, umfassend:
- eine erste Schicht aus kompaktem, wärmehärtbarem, vollständig vernetztem Polyurethan mit einer Dichte in g/cm3 zwischen 0,90 und 1,5 und Härten, gemessen gemäß der Beschreibung, zwischen 40 Shore A und 75 Shore D und einer Dicke von mehr als 1 mm;
- eine zweite Schicht aus einem Klebematerial auf beiden Seiten;
- einen Grundstrich, der zwischen der ersten Schicht und der zweiten Schicht angeordnet ist, wobei der Grundstrich mindestens eine Substanz umfasst, ausgewählt aus der Gruppe bestehend aus Acrylaten, Isocyanaten, Silanaten, Epoxiden oder Polyurethanen, und einen Metallträger, der mit der zweiten Schicht verklebt ist.

2. Gegenstand nach Anspruch 1, **dadurch gekennzeichnet, dass** das kompakte Polyurethan ausgehend von Diphenylmethandiisocyanat (MDI), Toluoldiisocyanat (TDI), Naphthalindiisocyanat (NDI) hergestellt wird.

3. Gegenstand nach einem der vorstehenden Ansprüche, **dadurch gekennzeichnet, dass** das kompakte Polyurethan eine Dichte zwischen 1 und 1,4 aufweist.

4. Gegenstand nach einem der vorstehenden Ansprüche, **dadurch gekennzeichnet, dass** das kompakte Polyurethan vorzugsweise eine Härte zwischen 60 Shore A und 95 Shore A aufweist.

5. Gegenstand nach einem der vorstehenden Ansprüche, **dadurch gekennzeichnet, dass** die zweite Schicht vollständig aus einer Substanz besteht, ausgewählt aus der Gruppe bestehend aus Acrylaten, Silikonen und Naturkautschuk.

6. Gegenstand nach einem der vorstehenden Ansprüche, **dadurch gekennzeichnet, dass** die zweite Schicht ein doppelseitiges Klebeband ist.

7. Gegenstand nach einem der vorstehenden Ansprüche, **dadurch gekennzeichnet, dass** der Grundstrich ein Acrylat umfasst.

8. Gegenstand nach einem der vorstehenden Ansprüche, **dadurch gekennzeichnet, dass** der Grundstrich aus einem Acrylat besteht.

9. Gegenstand nach einem der vorstehenden Ansprüche, **dadurch gekennzeichnet, dass** der Metallträger eine Dicke von mehr als 2 mm aufweist.

10. Verfahren zur Herstellung eines Gegenstands, umfassend ein mehrschichtiges Material nach einem der Ansprüche 1 bis 8, umfassend die folgenden Schritte:
- Bilden einer ersten Schicht aus kompaktem, wärmehärtbarem Polyurethan-Polyurethan;
- Behandeln der Oberfläche des kompakten, wärmehärtbaren Polyurethans durch erstes Waschen der Oberfläche;
- Behandeln der Oberfläche des kompakten, wärmehärtbaren Polyurethans durch Polieren der Oberfläche;
- Behandeln der Oberfläche des kompakten, wärmehärtbaren Polyurethans durch ein zweites Waschen der Oberfläche;
- Behandeln einer Oberfläche der ersten Schicht mit einem Grundstrich;
- Verkleben der zweiten Schicht mit der ersten Schicht mittels der Klebkraft der zweiten Schicht selbst.

## Revendications

1. Article comprenant un matériau multicouche comprenant :
- une première couche de polyuréthane compact thermodurcissable, entièrement réticulé, ayant une densité en gr/cm3 comprise entre 0,90 et 1,5 et des duretés, mesurées selon la description, comprises entre 40 Shore A et 75 Shore D et une épaisseur supérieure à 1 mm ;
- une seconde couche constituée d'un matériau adhésif sur les deux faces ;
- un apprêt interposé entre ladite première couche et ladite seconde couche, ledit apprêt comprenant au moins une substance choisie dans le groupe constitué par les acrylates, les isocyanates, les silanates, les époxydes ou les polyuréthanes, et un support métallique collé à ladite seconde couche.

2. Article selon la revendication 1, **caractérisé en ce que** ledit polyuréthane compact est produit à partir de diisocyanate de diphénylméthane (MDI), de diisocyanate de toluène (TDI), de diisocyanate de naphtalène (NDI).

3. Article selon l'une quelconque des revendications précédentes, **caractérisé en ce que** ledit polyuréthane compact a une densité comprise entre 1 et 1,4.

4. Article selon l'une quelconque des revendications précédentes, **caractérisé en ce que** ledit polyuréthane compact présente de préférence une dureté comprise entre 60 Shore A et 95 Shore A.

5. Article selon l'une quelconque des revendications précédentes, **caractérisé en ce que** ladite seconde couche est entièrement constituée d'une substance choisie dans le groupe constitué par les acrylates, les silicones, le caoutchouc naturel.

6. Article selon l'une quelconque des revendications précédentes, **caractérisé en ce que** la seconde couche est une bande adhésive double face.

7. Article selon l'une quelconque des revendications précédentes, **caractérisé en ce que** ledit apprêt comprend un acrylate.

8. Article selon l'une quelconque des revendications précédentes, **caractérisé en ce que** ledit apprêt est constitué d'un acrylate.

9. Article selon l'une quelconque des revendications précédentes, **caractérisé en ce que** ledit support métallique a une épaisseur supérieure à 2 mm.

10. Procédé de fabrication d'un article comprenant un matériau multicouche selon l'une quelconque des revendications 1 à 8 comprenant les étapes consistant à :
- former une première couche de polyuréthane compact thermodurcissable ;
- traiter la surface du polyuréthane compact thermodurcissable en la lavant d'abord ;
- traiter la surface du polyuréthane compact thermodurcissable en la polissant ;
- traiter la surface du polyuréthane compact thermodurcissable par un second lavage de la surface ;
- traiter la surface de la première couche avec un apprêt ;
- coller la seconde couche à la première couche grâce à la capacité adhésive de la seconde couche.
